# EUROPÄISCHE PATENTSCHRIFT

(11) **EP 0 732 044 B1**
(45) Veröffentlichungstag und Bekanntmachung des Hinweises auf die Patenterteilung: **27.05.1998**
(21) Anmeldenummer: 96103270.3
(22) Anmeldetag: 02.03.1996
(51) Int. Cl.: A01C 7/20

(54) **Rohr für eine landwirtschaftliche Maschine**
Tube for agriculture machine
Conduit pour machine agricole

(30) Priorität: 15.03.1995 US 404775
(43) Veröffentlichungstag der Anmeldung: 18.09.1996
(73) Patentinhaber: DEERE & COMPANY, Moline Illinois 61265-8098 (US)
(72) Erfinder: Long, John David, Ankeny, Iowa 50021 (US)
(74) Vertreter: Feldmann, Bernhard

(56) Entgegenhaltungen:
- DE-A- 62 541
- US-A- 4 669 922
- US-A- 4 911 090

## Beschreibung

Die Erfindung bezieht sich auf ein Rohr mit einem Einlaß, einem Auslaß und mit einem gebogenen Abschnitt für eine landwirtschaftliche Maschine zum Austragen von körnigem Gut in eine Furche vermittels eines Luftstroms, der zumindest teilweise ableitbar ist, wobei in dem Rohr ein Staukörper vorgesehen ist, der mit einer in dem Rohr vorgesehenen Luftöffnung zusammenwirkt und mit dem Rohr einstückig ausgebildet ist, wobei der Staukörper an der inneren Seite des gebogenen Abschnittes des Rohres vorgesehen ist.

Bei den Maschinen zum Austragen von körnigem Gut handelt es sich in der Regel um pneumatische Sä- und/oder Düngemaschinen, bei denen dosiertes Saatgut oder körniger Dünger in einem Luftstrom mit hoher Geschwindigkeit bis zur Abgabe in die feldseitige Furche gefördert wird. Der starke Luftstrom kann dann dazu führen, daß die an sich in gleichen Abständen abzulegenden einzelnen Saatgutkörner, aber auch die Düngepartikel in der Furche springen, d. h. nicht ordnungsgemäß abgelegt werden, oder sogar aus der Furche heraus geblasen werden. Der Effekt einer ordnungsgemäßen Einzelkornablage in die Furche in gleichmäßigen Abständen und in gleicher Tiefe geht damit verloren.

Bei einem bekannten Rohr für die Einzelkornablage (US-A-3 964 639) sind bereits Vorkehrungen getroffen worden, daß Druckluft aus dem Rohr abgeleitet werden kann, wenn sich das untere Ende des Rohres an seinem Auslaß mit Erdreich zusetzt. Zu diesem Zweck wird das Rohr aufgeschnitten und die beiden Schnittstellen werden mit einem hohlförmigen Einsatz verbunden, der an zwei sich gegenüberliegenden Seiten mit einer ganz bestimmten Anzahl von Luftaustrittsöffnungen und einenends mit einem Venturi-Austritt versehen ist. Bei auftretenden Verstopfungen soll dann die sich rückstauende und das Saatgut abbremsende Luft durch die Luftaustrittsöffnungen austreten, damit das Saatgut mit gleichbleibender Geschwindigkeit in die Furche abgelegt werden kann. Hierdurch sind für dieses bekannte Rohr Vorkehrungen getroffen, damit die Fördergeschwindigkeit im Rohr konstant gehalten werden kann.

Es ist auch nicht mehr neu, die Austrittsgeschwindigkeit des Gutes am Auslaß des Rohres zu vermindern. Sogenannte Saatgutbremsen wurden zu diesem Zweck bereits vorgeschlagen. So ist in einer Preisliste der Firma Dutch Industries LTD., Kanada eine derartige Bremse abgebildet, die aus einem gebogenem und beidseitig ausgewölbten Einsatz mit einer Vielzahl von Öffnungen besteht. Aus dem Dokument US-A-4 911 090 geht ein Saatrohr hervor, wie es im Oberbegriff des Anspruchs 1 beschrieben ist.

Die der Erfindung zugrunde liegende Aufgabe wird darin gesehen, daß eingangs genannte Rohr in einfacher Weise mit einer Gutbremse zu versehen, die den Gutfluß nicht oder nicht nennenswert behindert. Die Erfindung sieht hierzu vor, daß oberhalb des Staukörpers in der inneren Seite des gebogenen Abschnittes die Luftöffnung vorgesehen ist.

Infolge der im Rohr herrschenden Verhältnisse streicht das abzulegende Gut an der gebogenen Außenseite des gebogenen Abschnittes vorbei, so daß der Staukörper den Gutfluß überhaupt nicht behindert, da er sich bis höchstens in die Mitte des Rohres erstreckt. Da das Gut infolge der Krümmung des Rohres an dessen äußerer Seite vorbeistreicht, ist ein Mitreißen der einzelnen Gutkörner durch die durch die Luftöffnung austretende Luft vermieden. Die Luftöffnung kann damit größer als die einzelnen Partikel ausgebildet sein.

Der Staukörper ist mit dem Rohr einstückig ausgebildet. Dies kann in einfacher Weise dadurch erfolgen, daß der Staukörper durch Einknicken des Rohres gebildet ist. Dies hat noch den weiteren Vorteil, daß die dann in das Rohr ragenden Rohrteile oder Blechteile, da das Rohr vorzugsweise aus einem metallischen Werkstoff besteht, schräg verlaufen und ein Abrutschen von Gut ermöglichen, sollte es wider Erwarten mit dem Staukörper in Berührung kommen. Natürlich ist es im Rahmen der Erfindung auch möglich, einen entsprechend geformten Staukörper in das Rohr einzusetzen. Dies ist allerdings aufwendiger.

In der Zeichnung ist ein nachfolgend näher erläutertes Ausführungsbeispiel der Erfindung dargestellt. Es zeigt:
- Fig. 1: eine Furchenöffnereinheit in Seitenansicht,
- Fig. 2: ein mit einer Gutbremse versehenes Saatrohr in Seitenansicht und
- Fig. 3: einen Ausschnitt des Saatrohres nach Fig. 2 in einer Ansicht von rückwärts.

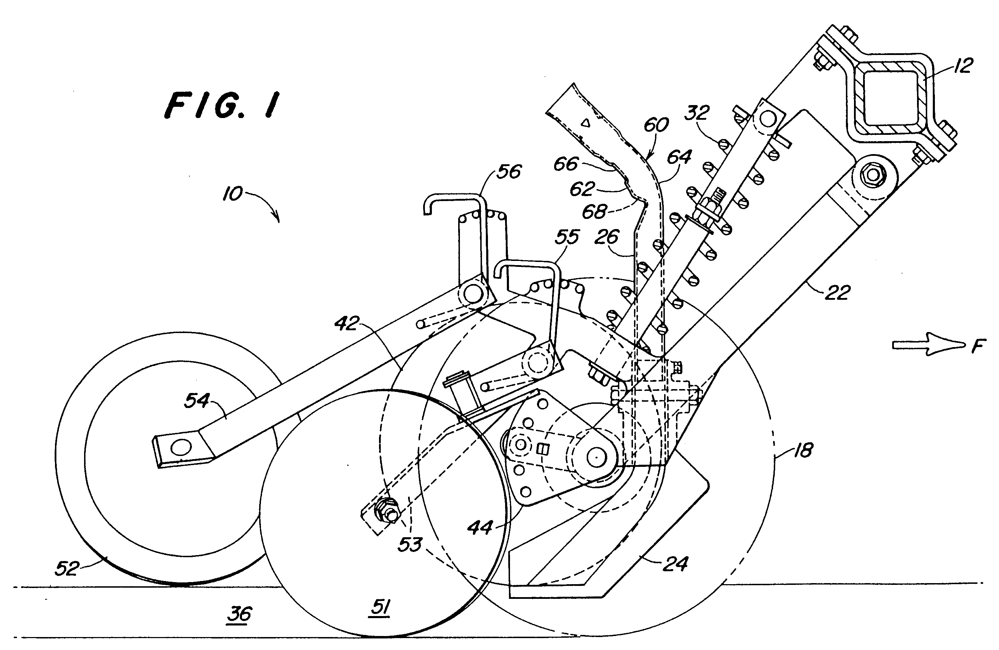

In Fig. 1 der Zeichnung ist mit 10 eine Furchenöffnereinheit einer landwirtschaftlichen Sämaschine bezeichnet. Bei der Sämaschine kann es sich um eine pneumatische Drillmaschine oder um eine pneumatische Einzelkornsämaschine handeln. Von der Sämaschine, die in Pfeilrichtung F das Feld bestellt, ist lediglich ein quer verlaufender Rahmenteil 12 erkennbar, an dem die Furchenöffnereinheit 10 aufgehängt ist. Letztere besteht unter anderem aus einem Furchenöffner 18 in Form von zwei V-förmig zueinander angeordneten Scheiben, die an einer an dem Rahmenteil 12 angeschlossenen Zugstange 22 drehbar gelagert sind und zwischen sich unmittelbar hinter den vorne zusammenlaufenden Frontkanten der Scheiben einen Saatschuh 24 aufnehmen. Diesem ist ein metallisches Saatrohr 26 zugeordnet, über das das Saatgut in den Boden abgelegt wird und das anderenends mit einer in der Zeichnung nicht dargestellten Dosiereinrichtung in Verbindung steht.

Über eine Federeinrichtung 32 wird auf den Furchenöffner 18 ein nach unten wirkender Druck ausgeübt, damit die Scheiben des Furchenöffners in den Boden eine Furche 36 schneiden können, in die durch das Saatrohr 26 die Saatkörner gegebenenfalls in gleichmäßigen Abständen und konstanter Tiefe abgelegt werden. In bekannter Weise sind außen neben den Scheiben etwas nach rückwärts versetzt, Tiefeneinstellräder 42 angeordnet, die die Furchentiefe bestimmen. Über eine Einstellvorrichtung 44, über die die Achse der Furcheneinstellräder höhenverstellbar ist, läßt sich die Furchentiefe variieren.

Unmittelbar rückwärtig des Furchenöffners 18 ist ein Andrückrad 51 und ein Zudeckrad 52 an Armen 53 und 54 angeordnet. Das Andrückrad läuft dabei normalerweise in der Furche und drückt das Saatgut in der Furche für einen guten Bodenkontakt fest. Das oder die Zustreichräder 52 bringen die Furchenseitenwände zum Einsturz, wodurch das in der Furche zuvor festgedrückte Saatgut mit einer losen Schicht Erdreich bedeckt wird. Federeinrichtungen 55 und 56 können den Bodendruck von Andrückrad 51 und Zudeckrad 52 bestimmen und variieren.

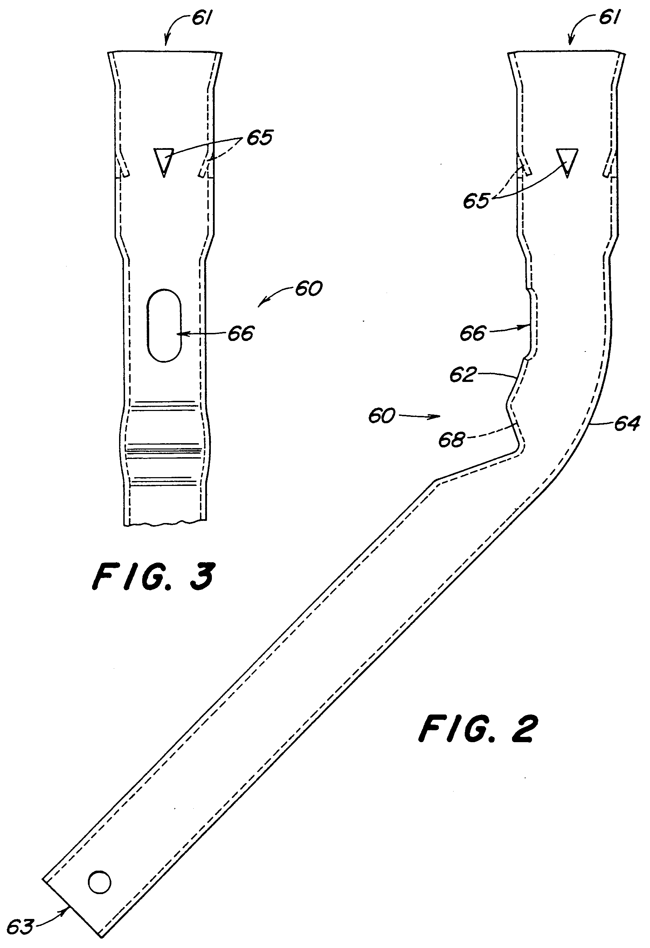

Das dem Saatschuh 24 zugeordnete und als Saatbremse ausgebildete Saatrohr 26 erstreckt sich, von der Furchenöffnereinheit 10 gesehen, weiter nach oben und ist im einzelnen in Fig. 2 dargestellt. Man erkennt dort an seinem oberen Ende einen Einlaß 61 für den Empfang von Samen und/oder auch von Dünger und an seinem unteren Ende einen Auslaß 63 für die Abgabe des Gutes. Das Saatrohr 26 ist gekennzeichnet durch einen gebogenen Abschnitt etwa in der Form eines Knies oder durch einen Bogenteil 60, dessen innere gebogene oder nach rückwärts weisende Seite mit 62 und dessen äußere oder nach vorne weisende Seite mit 64 bezeichnet ist. Im Bereich des Einlasses 61 bzw. etwas tiefer sind noch nach innen vorstehende Zungen 65 erkennbar, die zum Arretieren eines in das Saatrohr einsteckbaren Plastikrohres dienen, das wiederum zu dem Dosiergerät führt.

Bei pneumatischen Sämaschinen oder auch bei pneumatischen Düngerstreuern bzw. bei deren Kombination wird das Gut in einer Luftströmung mit in der Regel hoher Luftgeschwindigkeit gefördert, und das Saatrohr ist bei dem bevorzugten Ausführungsbeispiel, wie es in Fig. 1 erkennbar ist, derart angeordnet, daß der Luftstrom auf die äußere gebogene oder nach vorne weisende Seite 64 des Kniestücks 60 auftrifft. In diesem Bereich befindet sich auch die Saatbremse, weshalb etwas oberhalb des Knies in die innere gebogene oder nach rückwärts weisende Seite 64 des Kniestücks 60 eine Luftöffnung 66 eingearbeitet ist und im Knie selbst und damit unterhalb bzw. stromabwärts der Luftöffnung ein Staukörper 68 im Saatrohr vorgesehen ist. Der Staukörper 68 ist derart angeordnet bzw. ausgebildet, daß er in dem Saatrohr einen nach oben oder stromaufwärts wirkenden Rückdruck erzeugt, aufgrund dessen Druckluft durch die Luftöffnung 66 nach außen gedrückt wird. Der Staudruck wirkt als Luft- bzw. Saatbremse, die die Druckluft entfernt oder ihre Geschwindigkeit vermindert, so daß das Saatgut oder der pelletierte Dünger in seiner Austragsgeschwindigkeit gebremst wird.

Vorzugsweise erstreckt sich der Staukörper 68 bis etwa in die Mitte des Saatrohres, und zwar von der inneren gebogenen Seite 62 aus gesehen, so daß der Gutfluß durch den Staukörper nicht behindert wird. Der Staukörper kann in einfacher Weise dadurch geschaffen werden, daß das Saatrohr geknickt wird. Dadurch bestehen die innere Seite 62 und der Staukörper 68 aus einem Stück. Andererseits ist es natürlich möglich, daß in das Saatrohr ein winkliger Schlitz eingearbeitet wird, durch den ein Prallblech eingesetzt und mit dem Rohr verschweißt werden kann.

## Patentansprüche

1. Rohr (26) mit einem Einlaß (61), einem Auslaß (63) und mit einem gebogenen Abschnitt (60) für eine landwirtschaftliche Maschine zum Austragen von körnigem Gut in eine Furche (36) vermittels eines Luftstroms, der zumindest teilweise ableitbar ist, wobei in dem Rohr (26) ein Staukörper (68) vorgesehen ist, der mit einer in dem Rohr (26) vorgesehenen Luftöffnung (66) zusammenwirkt, und mit dem Rohr (26) einstückig ausgebildet ist, wobei der Staukörper (68) an der inneren Seite (62) des gebogenen Abschnittes (60) des Rohres (26) vorgesehen ist, dadurch gekennzeichnet, daß die Luftöffnung (66) oberhalb des Staukörpers (68) in der inneren Seite (62) des gebogenen Abschnittes (60) vorgesehen ist.

2. Rohr nach Anspruch 1, dadurch gekennzeichnet, daß der Staukörper (68) durch Einknicken des Rohres (26) gebildet ist.

## Claims

1. A tube (26) with an inlet (61), an outlet (63) and a curved section (60) for an agricultural machine, for feeding granular material into a furrow (36) by means of an airstream, which can be at least partially bled off, wherein a baffle body (68) is provided in the tube (26) and cooperates with an air opening (66) provided in the tube (26) and is in one piece with the tube (26), wherein the baffle body (68) is provided on the inner side of the curved section (60) of the tube (26), characterized in that the air opening (66) is provided above the baffle body (68) in the inner side (62) of the curved section (60).

2. A tube according to claim 1, characterized in that the baffle body (68) is formed by kinking the tube (26).

## Revendications

1. Tube (26) comportant une entrée (61), une sortie (63) et une partie coudée (60) pour une machine agricole pour déposer un matériau sous forme de grains dans un sillon (36) à l'aide d'un courant d'air, qui peut être au moins partiellement dévié, dans lequel il est prévu, dans le tube (26), un corps d'accumulation (68) qui coopère avec une ouverture (66) pour l'air, prévue dans le tube (26), et qui est formé d'un seul tenant avec le tube (26), le corps d'accumulation (68) étant prévu sur la face intérieure (62) de la partie coudée (60) du tube (26), caractérisé en ce que l'ouverture (66) pour l'air est aménagée au-dessus du corps d'accumulation (68) dans la face intérieure (62) de la partie coudée (60).

2. Tube selon la revendication 1, caractérisé en ce que le corps d'accumulation (68) est formé par coudage du tube (26).
